(19) **Europäisches Patentamt**

**European Patent Office**

**Office européen des brevets**

(11) Veröffentlichungsnummer: **0 246 565 B1**

(12) **EUROPÄISCHE PATENTSCHRIFT**

(45) Veröffentlichungstag der Patentschrift: **28.08.91**

(51) Int. Cl.⁵: **B23B 31/30, B23B 31/28**

(21) Anmeldenummer: 87107027.2

(22) Anmeldetag: 14.05.87

(54) **Spindel einer Werkzeugmaschine.**

(30) Priorität: 21.05.86 DE 3617103

(43) Veröffentlichungstag der Anmeldung:
25.11.87 Patentblatt 87/48

(45) Bekanntmachung des Hinweises auf die
Patenterteilung:
28.08.91 Patentblatt 91/35

(84) Benannte Vertragsstaaten:
**CH DE FR GB IT LI**

(56) Entgegenhaltungen:
GB-A- 2 163 679     US-A- 2 509 673
US-A- 3 232 181     US-A- 3 401 604
US-A- 3 492 894     US-A- 3 643 969
US-A- 3 645 170

(73) Patentinhaber: **Fortuna-Werke Maschinenfabrik GmbH**
**Pragstrasse 140**
**W-7000 Stuttgart 50(DE)**

(72) Erfinder: **Jesinger, Richard**
**Faissstrasse 11**
**W-7300 Esslingen/Neckar(DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1(DE)**

**Beschreibung**

Die Erfindung betrifft eine Spindel einer Werkzeugmaschine, die um eine Längsachse drehbar gelagert ist, mit Spannmitteln zum Ein- und Ausspannen eines Werkzeugs, mit einem Energiespeicher, der bei nicht-eingespanntem Werkzeug einen ersten Ladungszustand und bei eingespanntem Werkzeug zum Anziehen der Spannmittel einen zweiten Ladungszustand einnimmt, und mit einer Betätigungseinheit zum Umladen des Energiespeichers mittels einer über einen Anschluß zugeführten Fremdkraft, wobei die Betätigungseinheit und der Anschluß im rotierenden Teil der Spindel angeordnet sind.

Eine Spindel der vorstehend genannten Art ist aus dem Dokument US-A-2 509 673 bekannt.

Bei der bekannten Spindel ist eine rotierende Spannvorrichtung für Werkzeuge vorgesehen. Die Spannvorrichtung umfaßt eine Spannzange, die durch Verschieben in Richtung der Drehachse der Spannvorrichtung betätigbar ist. Zum Betätigen der Spannzange ist ein Hebel vorgesehen, der mittels einer KolbenZylinder-Einheit verschwenkbar ist. Die Kolben-Zylinder-Einheit wird durch einen doppeltwirkenden Kolben dargestellt, auf dessen beiden Seiten Dehnkörper aus elastischem Material angeordnet sind. Die Dehnkörper sind über Steckanschlüsse mittels eines Fluids beaufschlagbar. In die Steckanschlüsse kann ein Stecker eingeführt werden, der sich am Ende einer elastischen Leitung befindet, so daß jeder der beiden Steckanschlüsse mit dem Stecker verbunden werden kann. Der Stecker ist dabei mit einem mechanisch starren Bügel versehen, damit der jeweils andere Steckanschluß, in den der Stecker nicht eingeführt ist, geöffnet wird. Auf diese Weise wird Fluid auf eine Seite des doppelt-wirkenden Kolbens gebracht, während zugleich die gegenüberliegende Seite des Kolbens entlüftet wird.

Bei der bekannten Spindel kann somit die rotierende Spannvorrichtung "geladen" werden, die hierzu eingesetzten Mittel, nämlich die fluidbetätigte Kolben-Zylinder-Einheit, die Steckanschlüsse und der Stecker sind jedoch mechanisch aufwendig und gestatten es insbesondere nicht, die Spannvorrichtung während des Betriebes, d.h. während der Rotation der Spannvorrichtung nachzuladen. Zwar ist in diesem Dokument US-A-2 509 673 noch eine weitere rotierende Spannvorrichtung beschrieben, bei der einer Kolben-Zylinder-Einheit auch im rotierenden Zustand ein Fluid zugeführt werden kann, diese weitere bekannte Spindel ist jedoch stationär eingebaut und kann somit nicht aus einer Spindel einer Werkzeugmaschine entnommen und extern "geladen" werden, wie dies in vielen Fällen gewünscht wird, bspw. dann, wenn sehr kleine Werkzeuge eingespannt werden sollen, was unmittelbar an der Werkzeugmaschine gelegentlich aus Raumgründen problematisch ist.

Der Erfindung liegt daher die Aufgabe zugrunde, eine Spindel der eingangs genannten Art dahingehend weiterzubilden, daß mit möglichst einfachen konstruktiven Mitteln ein "Laden" der Spannvorrichtung auch außerhalb der Spindel einer Werkzeugmaschine möglich ist und daß auch während der Rotation der Spannvorrichtung mit sehr hohen Drehzahlen ein "Nachladen" der Spannvorrichtung vorgenommen werden kann.

Diese Aufgabe wird erfindungsgemäß dadurch gelöst, daß die Betätigungseinheit eine Packung elektro- oder magnetostriktiver Elemente, insbesondere Piezoelemente, ist, der elektrische Energie über ein an der Spindel angeordnetes elektrisches Verbindungsmittel zuführbar ist, daß das elektrische Verbindungsmittel ein Schleifkontakt ist, der über einen Umfang der Spindel läuft, und daß die Spindel mit mindestens 30.000 Umdrehungen pro Minute umläuft.

Die der Erfindung zugrundeliegende Aufgabe wird auf diese Weise vollkommen gelöst. Die Erfindung hat nämlich den Vorteil, daß auf besonders einfache Weise, nämlich durch Zuführung elektrischer Energie, ein Spannen des Werkzeugs in der Spindel möglich ist, wobei die verwendeten elektro- oder magnetostriktiven Elemente, insbesondere Piezoelemente, auch verschleißfrei arbeiten und in einer Ausführung zur Verfügung stehen, bei der auch sehr hohe Spannkräfte erzeugt werden können. Auch eine Dosierung der Spannkraft durch geeignetes Einstellen der Speisespannung oder des Speisestroms ist auf diese Weise ohne Probleme möglich. Die Erfindung hat ferner den Vorteil, daß die Betätigungseinheit auch bei rotierender Spindel "nachgeladen" werden kann, wenn - bspw. infolge von Leckstromverlusten - die von den Elementen erzeugte mechanische Spannung nachgelassen haben sollte.

Bei einer bevorzugten Variante der Erfindung ist das Werkzeug mittels einer Zugstange gegen einen ersten axialen Anschlag in die Spindel einziehbar, und die Elemente sind zwischen einem dem Werkzeug zugewandten zweiten axialen Anschlag und einem vom Werkzeug abgewandten Flansch der Zugstange angeordnet.

Diese Maßnahme hat den Vorteil, daß beim Einziehen des Werkzeugs in die Spindel mittels der Zugstange die Ausdehnung der Elemente ausgenutzt wird, so daß die Elemente bei eingespanntem Werkzeug auf Druck belastet sind, eine Belastung, der sie über längere Zeit standzuhalten vermögen als einer Zugbelastung.

Besonders bevorzugt ist dabei, wenn die Elemente als Ringelemente ausgebildet sind, die Zugstange die Ringelemente durchsetzt und der Flansch als axial starr mit der Zugstange verbundene Scheibe ausgebildet ist.

Auf diese Weise ergibt sich ein sehr kompakter und raumsparender Aufbau mit minimalem Bedarf an mechanischen Elementen, so daß das Eigengewicht und damit das Trägheitsmoment der Spindel herabgesetzt wird, was bei extrem schnell drehenden Spindeln ein besonderer Vorteil ist.

Schließlich ist eine Ausführungsform der Erfindung bevorzugt, die sich dadurch auszeichnet, daß die Elemente die Betätigungseinheit in einer ersten Stellung für das Einsetzen des Werkzeugs in die Spindel aus einer Nullstellung des Einzugweges auf einen Teil des Einzugweges führen, in einer zweiten Stellung für das Einspannen des Werkzeugs in der Spindel auf vollem Einzugweg halten und in einer dritten Stellung beim Ausspannen des Werkzeugs aus der Spindel wieder auf die Nullstellung des Einzugweges zurücksetzen.

Diese Maßnahme hat den Vorteil, daß durch die bereits teilweise "vorgespannte" Stellung der Betätigungseinheit in dem Augenblick, wenn das Werkzeug, bspw. manuell oder durch einen Greifer eines Handhabungssystems eingesetzt wird, zum einen ein noch genügend Einspannweg verbleibt, um das Werkzeug sicher in der Aufnahme der Spindel zu halten, andererseits aber zum Ausspannen noch ein entgegengesetzter Weg aus der Spindel heraus ausgeführt werden kann, und zwar durch vollständiges Lösen der Betätigungseinheit, so daß das Werkzeug auch sicher aus der Spindel ausgestoßen und entnommen werden kann.

Ein Ausführungsbeispiel der Erfindung ist in der Zeichnung dargestellt und wird in der nachfolgenden Beschreibung näher erläutert. Es zeigen:

Fig. 1    eine Schnittdarstellung eines Ausführungsbeispiels einer erfindungsgemäßen Spindel mit piezoelektrischer Spannvorrichtung;

Fig. 2    ein Diagramm zur Veranschaulichung eines Einspannweges über der Zeit für eine besonders bevorzugte Vorgehensweise bei der Benutzung erfindungsgemäßer Spindeln.

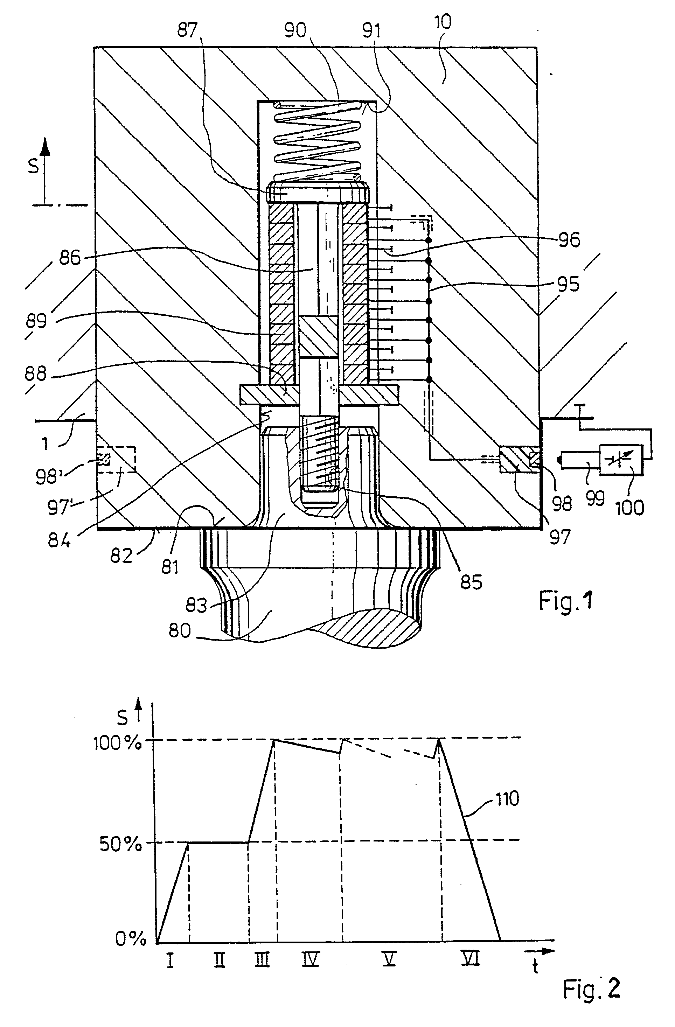

Fig. 1 zeigt ein Ausführungsbeispiel einer erfindungsgemäßen Spindel 10, die mit sehr hoher Drehzahl von mindestens 30.000 min$^{-1}$ um ihre Längsachse im Spindelstock 1 gedreht werden soll.

Von der Unterseite der Spindel 10 her soll ein Werkzeug 80 in die Spindel 10 eingesetzt werden. Das Werkzeug 80 ist mit einer umlaufenden radialen Schulter 81 versehen, die beim Einsetzen des Werkzeugs 80 in die Spindel 10 in Anlage an eine parallele Außenfläche 82 der Spindel 10 kommt. Ein axialer Zapfen 83 des Werkzeugs 80 ragt dann in eine axiale erste Bohrung 84 der Spindel 10. Der Zapfen 83 ist mit einer zentralen zweiten Bohrung 85 versehen, die als Gewinde-Sackbohrung ausgebildet ist. Ist das Werkzeug 80 von unten manuell oder mittels eines geeigneten Handhabungsgerätes an die Spindel 10 herangeführt, wird der Zapfen 83 in die erste Bohrung 84 eingesetzt und mittels der zweiten Bohrung 85, der GewindeSackbohrung, auf ein passendes Gegengewinde einer in diesem Bereich zylindrischen Zugstange 86 aufgeschraubt, die sich in axialer Stellung in der Spindel 10 befindet.

Die Zugstange 86 trägt an ihrem dem Gewindeabschnitt gegenüberliegenden Ende eine radiale Scheibe 87 und sie durchsetzt in einem dem Gewindeabschnitt benachbarten Bereich eine Führungsplatte 88. Die Führungsplatte 88 ist axial am Rande der ersten Bohrung 84 fixiert. Die Zugstange 86 ist in dem die Führungsplatte 88 durchsetzenden Bereich unrund, bspw. mit quadratischem Querschnitt ausgebildet, wie in Fig. 1 angedeutet. Die zugehörige Öffnung der Führungsplatte 88 umfaßt den unrunden Umfang der Zugstange 86 formschlüssig, so daß die Zugstange 86 insgesamt drehfest, jedoch in gewissen Grenzen axial verschieblich, in der Spindel 10 gelagert ist. Es versteht sich jedoch, daß die drehstarre Lagerung der Zugstange 86 auch auf andere Weise erfolgen kann, bspw. dadurch, daß die Scheibe 87 unrund ausgebildet ist und formschlüssig in einem entsprechend ausgebildeten Abschnitt der zweiten Bohrung 84 läuft oder durch andere ebenfalls an sich bekannte Maßnahmen zur drehstarren Anordnung einer Stange.

Zwischen der Scheibe 87 und der Führungsplatte 88 befindet sich eine Packung von Piezoelementen 89, deren Anzahl und Dicke je nach Anwendungsfall eingestellt werden kann. Im Extremfall würde auch ein einziges Piezoelement 89 ausreichen.

Schließlich ist die Scheibe 87 noch über eine Schraubenfeder 90 gegenüber einem dem Werkzeug 80 gegenüberliegenden Boden 91 der ersten Bohrung 84 abgestützt.

Es versteht sich, daß statt der Piezoelemente 89 auch magnetostriktive Elemente oder sonstige mittels elektrischer Energie längenveränderliche Elemente eingesetzt werden können.

Die als Beispiel dargestellten Piezoelemente 89 können in unterschiedlicher Weise verschaltet sein. Beim Ausführungsbeispiel der Fig. 1 sind sämtliche Piezoelemente 89 parallel geschaltet, indem sie im Bereich einer Grenzfläche an ein isoliertes Kabel 85 angeschlossen sind, während sie mit der jeweils gegenüberliegenden Grenzfläche mit Masseanschlüssen 96 versehen sind. Es versteht sich jedoch, daß die Piezoelemente 89 im Bedarfsfalle auch in Reihe oder gruppenweise in Reihe/parallelgeschaltet sein können, je nachdem, wie es im Einzelfall zweckmäßig ist.

Das isolierte Kabel 95 ist durch die Spindel 10 hindurch zu einer isolierten Buchse 97 geführt, die an ihrer Außenseite einen Berühr- bzw. Schleifkontakt 98 oder ein anderes elektrisches Verbindungsmittel, bspw. einen formschlüssigen Stecker, aufweist.

Als separates Element ist ein Schleifer 99 an eine einstellbare Stromquelle 100 angeschlossen. Berührt der Schleifer 99 den Schleifkontakt 98, liegt Spannung an den Piezoelementen 89, so daß sich diese je nach eingestelltem Strom oder eingestellter Spannung in axialer Richtung dehnen oder zusammenziehen. Besonders bevorzugt ist, wenn der Schleifkontakt 98 in Umfangsrichtung um die Spindel 10 umläuft, wie mit 97', 98' angedeutet, weil dann auch bei rotierender Spindel 10 der Schleifer 99 am Schleifkontakt 98 kontinuierlich anliegen kann.

Fig. 2 zeigt eine mögliche Vorgehensweise beim Einspannen und Festspannen des Werkzeugs 80 beim Ausführungsbeispiel der Fig. 1. Fig. 2 veranschaulicht den Einzugweg s, der über der Zeit t aufgetragen ist.

Während einer ersten Phase I wird - bei noch nicht eingespanntem Werkzeug 80 - die Zugstange 86 bereits um 50 % des gesamtmöglichen Einzugweges s eingezogen. Beim Ausführungsbeispiel der Fig. 1 kann dies bspw. dadurch erfolgen, daß die Piezoelemente 89 mit der halben Nennspannung beaufschlagt werden.

Während der sich anschließenden Phase II wird das Werkzeug 80 von Hand in die Spindel 10 eingesetzt, z.B. in der in Fig. 1 dargestellten Weise an das untere Ende der Zugstange 86 lose von Hand angeschraubt. In einer dritten Phase III wird nun die Zugstange 86 um den vollen Einzugweg s auf 100 % dieses Weges eingezogen und das Werkzeug 80 auf diese Weise fest mit der Spindel 10 verspannt.

In darauffolgenden Phasen IV und V kann nun von Zeit zu Zeit ein Nachladen der Piezoelemente 89 vorgenommen werden, sofern sich diese mit der Zeit durch Leckströme teilentladen sollten.

Zum Lösen des Werkzeugs 80 wird die Zugstange 86 auf 0 % des Einzugweges s wieder ausgefahren, d.h. um 50 % des Weges mehr als der Stellung entspricht, in der das Werkzeug 80 von Hand eingesetzt wurde. Da das Werkzeug nunmehr um ein Stück, nämlich um 50 % des vollen Einzugweges s aus der Spindel 10 herausragt, ist ein Lösen des Werkzeugs 80 leicht möglich.

**Patentansprüche**

1. Spindel einer Werkzeugmaschine, die um eine Längsachse drehbar gelagert ist, mit Spannmitteln zum Ein- und Ausspannen eines Werkzeugs (80), mit einem Energiespeicher, der bei nicht-eingespanntem Werkzeug (80) einen ersten Ladungszustand und bei eingespanntem Werkzeug (80) zum Anziehen der Spannmittel einen zweiten Ladungszustand einnimmt, und mit einer Betätigungseinheit (86-91) zum Umladen des Energiespeichers mittels einer über einen lösbaren Anschluß (97, 98) zugeführten Fremdkraft, wobei die Betätigungseinheit (86-91) und der Anschluß (97, 98) im rotierenden Teil der Spindel (10) angeordnet sind, dadurch gekennzeichnet, daß die Betätigungseinheit eine Packung elektro- oder magnetostriktiver Elemente, insbesondere Piezoelemente (89) ist, der elektrische Energie über ein an der Spindel (10) angeordnetes elektrisches Verbindungsmittel zuführbar ist, daß das elektrische Verbindungsmittel ein Schleifkontakt (98) ist, der über einen Umfang der Spindel (10) läuft, und daß die Spindel (10) mit mindestens 30.000 Umdrehungen pro Minute umläuft.

2. Spindel nach Anspruch 1, dadurch gekennzeichnet, daß das Werkzeug (80) mittels einer Zugstange (86) gegen einen ersten axialen Anschlag in die Spindel (10) einziehbar ist und daß die Elemente zwischen einem dem Werkzeug (80) zugewandten zweiten axialen Anschlag und einem vom Werkzeug (80) abgewandten Flansch der Zugstange (86) angeordnet sind.

3. Spindel nach Anspruch 2, dadurch gekennzeichnet, daß die Elemente als Ringelemente ausgebildet sind, daß die Zugstange (86) die Ringelemente durchsetzt, und daß der Flansch als axial starr mit der Zugstange (86) verbundene Scheibe (87) ausgebildet ist.

4. Spindel nach einem der Ansprüche 1 bis 3, dadurch gekennzeichnet, daß die Elemente die Betätigungseinheit (86-91) in einer ersten Stellung (I) für das Einsetzen des Werkzeugs (80) in die Spindel (10) aus einer Nullstellung (0 %) des Einzugweges (s) auf einen Teil (50 %) des Einzugweges (s) führen, in einer zweiten Stellung (IV - V) für das Einspannen des Werkzeuges (80) in der Spindel (10) auf vollem (100 %) Einzugweg (s) halten und in einer dritten Stellung (VI) zum Ausspannen des Werkzeugs (80) aus der Spindel (10) wieder auf die Nullstellung (0 %) des Einzugweges (s) zurücksetzen.

**Claims**

1. Machine tool spindle being rotatable about a longitudinal axis and comprising chucking means for clamping and for releasing, respectively, a tool (80), an energy storage assuming a first charge state with the tool (80) being not clamped and assuming a second charge state with the tool (80) clamped for tightening the chucking means, actuating means (86 - 91) for effecting a change in charge state within the energy storage by means of external forces, supplied via a releasable connector (97, 98), the actuating means (86 - 91) and the connector (97, 98) being arranged within the rotating portion of the spindle (10), characterized in that the actuating means is a set of electrorestrictive or magnetorestrictive elements, in particular piezo elements (89), to which electrical energy may be supplied via an electrical connecting means arranged at the spindle, that the electrical connecting means is a sliding contact (98) running about a periphery of the spindle (10), and that the spindle (10) rotates with at least 30,000 revolutions per minute.

2.  The spindle of claim 1, characterized in that a draw bar (86) is provided for drawing the tool (80) into the spindle (10) against a first axial stop, the elements being arranged between a second axial stop facing the tool (80) and a flange of the draw-in bar (86) facing away from the tool (80).

3.  The spindle of claim 2, characterized in that the elements are shaped as annular elements, the draw-in bar (86) passing through the annular elements, and that the flange is shaped as a disk (87) being axially rigidly connected to the draw-in bar (86).

4.  The spindle of any of claims 1 - 3, characterized in that to get into a first position (I) for insertion of the tool (80) into the spindle (10), the actuating means is displaced out of a zero position (0 %) of a total clamping travel (s) through part (50 %) of the clamping travel (s) that, further, to get into a second position (IV - V) for clamping the tool (80) in the spindle (10), the actuating means is displaced into a maximum (100 %) of the clamping travel (s) and is held therein, and that to get into a third position (VI) for releasing the tool (80) from the spindle (10), the actuating means is returned into the zero position (0 %) of the clamping travel (s).

**Revendications**

1.  Broche d'une machine-outil, montée à rotation autour d'un axe longitudinal, avec des moyens de serrage, pour bloquer et débloquer un outil (80), avec un accumulateur d'énergie, qui prend un premier état de charge lorsque l'outil (80) n'est pas bloqué et un deuxième état de charge, lorsque l'outil (80) est bloqué , en vue de serrer les moyens de serrage, et avec un ensemble d'actionnement (86 à 91), pour charger l'accumulateur d'énergie au moyen d'une force extérieure amenée à l'accumulateur d'énergie au moyen d'un raccordement amovible (97,98), où l'ensemble d'actionnement (86 à 91) et le raccordement (97,98) sont disposés dans la partie rotative de la broche (10), caractérisée en ce que l'ensemble d'actionnement est formé d'un groupe d'éléments électro- ou magnétostrictifs, en particulier de piézoéléments (89), auxquels l'énergie électrique est susceptible d'être amenée par un moyen de liaison électrique disposé sur la broche (10), que le moyen de liaison électrique est un contact à balai (98), défilant sur une périphérie de la broche (10), et que la broche (10) tourne à une vitesse de rotation d'au moins 30.000 t/min.

2.  Broche selon la revendication 1, caractérisée en ce que l'outil (80) est susceptible d'être attiré dans la broche (10), au moyen d'une tige de traction (86), contre une première butée axiale, et que les éléments sont disposés entre une deuxième butée axiale, tournée vers l'outil (80), et une bride de la tige de traction (86), opposée à l'outil (80).

3.  Broche selon la revendication 2, caractérisée en ce que les éléments sont réalisés sous forme d'éléments annulaires, que la tige de traction (86) traverse les éléments annulaires, et que la bride est réalisée sous forme de disque (87) relié rigidement axialement à la tige de traction (86).

4.  Broche selon l'une des revendications 1 à 3, caractérisée en ce que les éléments guident l'ensemble d'actionnement (86 à 91), en une première position (I) pour l'insertion de l'outil (80) dans la broche (10), depuis une position zéro (0%) de la course d'insertion (s), sur une partie (50%) de la course d'insertion (s), assurent le maintien en une deuxième position (IV-V), pour le serrage de l'outil (80) dans la broche (10), à la pleine (100%) course d'insertion (s), et reviennent à la position zéro (0%) de la course d'insertion (s) en une troisième position (VI), pour relâcher le serrage de l'outil (80) et le sortir de la broche (10).

Fig.1

Fig.2